# EUROPÄISCHE PATENTANMELDUNG

(11) **EP 2 284 467 A1**
(43) Veröffentlichungstag der Anmeldung: **16.02.2011**
(21) Anmeldenummer: 09151422.4
(22) Anmeldetag: 27.01.2009
(51) Int. Cl.: F25J 3/04, F01K 23/06

(54) **Luftzerlegungsanlage für schnelle Laständerungen eines Gas- und Dampfkraftwerks mit integrierter Vergasung sowie Verfahren zum Betrieb einer Luftzerlegungsanlage**

(71) Anmelder: Siemens Aktiengesellschaft, 80333 München (DE)
(72) Erfinder: Keyser, Jens, 90766 Fürth (DE); Brunhuber, Christian, 91275 Auerbach (DE); Reimuth, Oliver, 91058 Erlangen (DE)

(57) **Zusammenfassung**

Die Erfindung betrifft Luftzerlegungsanlage (33) mit einer Luftzerlegungseinrichtung (13), wobei der Luftzerlegungseinrichtung (13) ein Prozessluftpufferbehälter (34) vorgeschaltet ist. Die Erfindung betrifft ferner ein Verfahren zum Betrieb einer Luftzerlegungsanlage (33).

## Beschreibung

Die Erfindung betrifft eine Luftzerlegungsanlage, insbesondere für eine Gas- und Dampfturbinenanlage mit integrierter Vergasung, und bezieht sich auf das Problem der schnellen Laständerungen der Gasturbine, wie sie beispielsweise durch die Forderungen des britischen Grid Codes hervorgerufen werden. Die Erfindung betrifft ferner ein Verfahren zum Betrieb einer Luftzerlegungsanlage für schnelle Laständerungen einer Gasturbine im Synthesegasbetrieb.

Als Alternative zu herkömmlichen Dampfkraftwerken (DKW), vor allem in Hinsicht auf die potentiellen Wirkungsgradvorteile der GuD-Anwendung im Vergleich zum DKW, wird der Einsatz von Vergasungskraftwerken (IGCC-Integrated Gasification Combined Cycle) zur Erzeugung von Synthesegasen mit anschließendem Einsatz in einem GuD-Prozess gesehen. Wesentlich für den Betrieb einer IGCC-Anlage ist das dem GuD-Kraftwerk vorgeschaltete Synthesegasbrennstoffsystem, umfassend die Komponenten Luftzerlegungsanlage, Stickstoffverdünnung, Wasser-/Dampf-Sättigung, Erdgasbeimischung und Wärmetauscher.

Die Luftzerlegungsanlage liefert den Sauerstoff für die Herstellung eines konditionierten Synthesegases entsprechend den Temperatur- und Heizwertanforderungen des stromabwärts liegenden Verbrauchers, der Gasturbine. Die in der Luftzerlegungsanlage benötigte Druckluft wird bei (teil-) integrierter Luftentnahme dem Gasturbinenverdichter, bei nicht integrierter Luftentnahme einem separaten Verdichter entnommen und mittels integrierter Wärmetauscher auf das von der Luftzerlegungsanlage geforderte Temperaturniveau eingestellt.

Aufgrund der Interaktion der beteiligten Hauptsysteme (Luftzerlegungsanlage, Vergasung, Gaswäsche, GuD) ist das GuD-Kraftwerk mit integrierter Vergasung derzeitig als grundlastfähiges Teilsystem der Komplettanlage ausgeführt, wobei steile Lastgradienten der Gasturbine, dargestellt mittels reiner Synthesegasmassenstromsteigerung, nicht realisiert werden können.

Bekannt sind eine Vorrichtung bzw. ein Verfahren aus der DE 100 02 084 C2 mit einer Gas- und Dampfturbinenanlage mit einem einer Gasturbine rauchgasseitig nachgeschalteten Abhitzedampferzeuger, dessen Heizflächen in den Wasser-Dampf-Kreislauf einer Dampfturbine geschaltet sind, und mit einem der Brennkammer der Gasturbine vorgeschalteten Brennstoffsystem, das eine Vergasungseinrichtung für fossilen Brennstoff und eine von der Vergasungseinrichtung abzweigende und in die Brennkammer der Gasturbine mündende Gasleitung umfasst.

Nachteilig hieran ist, dass die druckluftseitige Interaktion zwischen Gasturbine (Verdichter und Brennkammer) und Luftzerlegungsanlage sich als schwierig beherrschbar darstellt, da Druckschwankungen aus der Luftzerlegungsanlage (Anfahren aus Teillast) direkt auf die Gasturbine zurückwirken und dadurch zum Abfahren der Gasturbine führen. Durch die Anforderungen an eine schnelle und stabile Verfügbarkeit der Gasturbine und der Luftzerlegungsanlage muss eine in Bezug auf Druckschwankungen entkoppelte Lösung im Luftentnahmesystem realisiert werden.

Im Luftentnahmesystem gibt es eine starke druckschwankungsseitige Interaktion zwischen der Luftzerlegungsanlage und der Gasturbine, da das Luftvolumen der Luftzerlegungsanlage deutlich größer ist als das der Gasturbine. Derzeit wird diesem Aufbau mit den bekannten Problemen durch eine komplizierte Gasturbinen- und Luftentnahmeregelung Rechnung getragen, die aber keiner Gasturbinenstandardregelung entspricht sowie die Anforderung an eine schnelle Laständerung der Gasturbine und der Luftzerlegungsanlage nicht erfüllen kann.

Aufgabe ist es, die genannte Vorrichtung und das genannte Verfahren weiterzuentwickeln, so dass Forderungen an einen steilen Lastgradienten erfüllt werden und die Luftzerlegungsanlage möglichst unabhängig und mit nur geringen Auswirkungen auf die benachbarten Hauptsysteme angepasst wird.

Erfindungsgemäß wird diese Aufgabe gelöst durch die Vorrichtung gemäß Anspruch 1 und das Verfahren gemäß Anspruch 12. Vorteilhafte Weiterbildungen der Erfindung sind in den abhängigen Ansprüchen definiert.

Indem der Luftzerlegungseinrichtung ein Prozessluftpufferbehälter vorgeschaltet ist, wird folgendes erreicht:

Die Gasturbine und die Luftzerlegungseinrichtung werden bezogen auf die Druckluft entkoppelt, wodurch die Anlagenverfügbarkeit im Fall eines luftseitig integrierten IGCC-Anlagenkonzepts zunimmt.

In einer vorteilhaften Ausführungsform ist der Prozessluftpufferbehälter der Luftzerlegungseinrichtung unmittelbar vorgeschaltet, so dass eine schnelle Verfügbarkeit der benötigten Druckluft sichergestellt werden kann.

Es ist vorteilhaft, wenn der Prozessluftpufferbehälter eine Drucküberwachung aufweist. Weiter ist es vorteilhaft, wenn der Prozessluftpufferbehälter eine Druckregelung aufweist, die dafür sorgt, dass bei Überschreitung eines zulässigen Überdruckes über eine Sicherheitsarmatur Luft abgeblasen wird.

Vorteilhafter Weise ist dem Prozessluftpufferbehälter ein Luftverdichter zum Befüllen des Prozessluftpufferbehälters mit Prozessluft und zum Verdichten der Prozessluft vorgeschaltet.

Dabei ist es zweckmäßig, wenn eine Regelarmatur zwischen dem Luftverdichter und dem Prozessluftpufferbehälter angeordnet ist.

Vorteilhafter Weise ist die Luftzerlegungseinrichtung eine kryogene Luftzerlegungseinrichtung. Das kryogene Luftzerlegungsverfahren (Tieftemperaturluftzerlegung) ist technisch ausgereift und zerlegt die Luft in einem mechanisch getriebenen thermodynamischen Prozess in ihre wesentlichen Bestandteile Stickstoff und Sauerstoff.

In einer weiteren vorteilhaften Ausführungsform ist die Luftzerlegungseinrichtung eine membranbasierte Luftzerlegungseinrichtung. Die Membraneffekte - elektrochemisch oder auch durch die Partialdruckdifferenz des Sauerstoffs zwischen der Sauerstoff abgebenden Luftseite (Retentatseite) und der Sauerstoff aufnehmenden Seite (Permeatseite) indiziert - führen zu einer zumindest teilweisen Abscheidung des Sauerstoffs aus der Luft.

Vorteilhafter Weise umfasst eine Gas- und Dampfturbinenanlage mit integrierter Vergasung eine solche Luftzerlegungsanlage.

Dabei ist es vorteilhaft, wenn der Verdichter einer Gasturbine der Gas- und Dampfturbinenanlage mit dem Druckluftpufferbehälter über eine Entnahmeluftleitung verbunden ist.

Im erfinderischen Verfahren zum Betrieb einer Luftzerlegungsanlage, wird Prozessluft für die Luftzerlegungseinrichtung gepuffert.

Die Erfindung wird beispielhaft anhand der Zeichnungen näher erläutert. Es zeigen schematisch und nicht maßstäblich:
- FIG 1: ein bekanntes Synthesegasbrennstoffsystem und
- FIG 2: eine Luftzerlegungsanlage gemäß der Erfindung mit Prozessluftpufferbehälter.

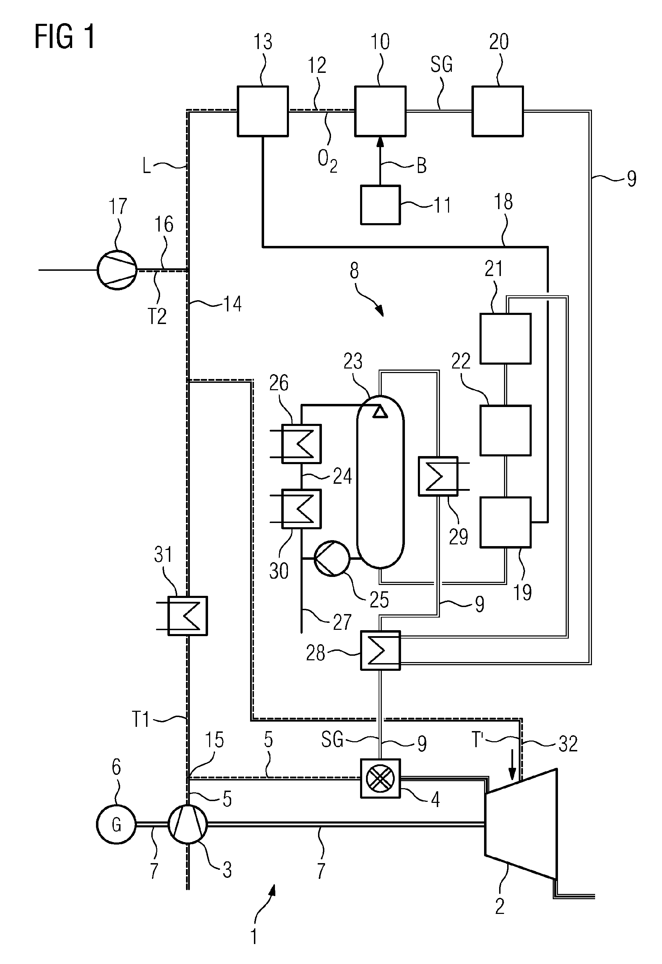

Eine bekannte Gas- und Dampfturbinenanlage umfasst eine Gasturbinenanlage 1 gemäß der Figur 1 und eine nicht näher dargestellte Dampfturbinenanlage. Die Gasturbinenanlage 1 umfasst eine Gasturbine 2 mit angekoppeltem Verdichter 3 und eine der Gasturbine 2 vorgeschaltete Brennkammer 4, die an eine Druckluftleitung 5 des Verdichters 3 angeschlossen ist. Die Gasturbine 2 und der Verdichter 3 sowie ein Generator 6 sitzen auf einer gemeinsamen Welle 7.

Die Gasturbinenanlage 1 ist für den Betrieb mit einem vergasten Rohgas oder Synthesegas SG, das durch die Vergasung eines fossilen Brennstoffs B erzeugt wird, ausgelegt. Als Synthesegas kann beispielsweise vergaste Kohle oder vergastes Öl vorgesehen sein. Hierzu umfasst die Gasturbinenanlage 1 ein Synthesegasbrennstoffsystem 8, über das der Brennkammer 4 der Gasturbine 2 Synthesegas zuführbar ist. Das Synthesegasbrennstoffsystem 8 umfasst eine Haupt-Synthesegasleitung 9, die eine Vergasungseinrichtung 10 mit der Brennkammer 4 der Gasturbine 2 verbindet. Der Vergasungseinrichtung 10 ist über ein Eintragssystem 11 beispielsweise Kohle, Erdgas, Öl oder Biomasse als fossiler Brennstoff B zuführbar. Weiterhin umfasst das Synthesegasbrennstoffsystem 8 Komponenten, die zwischen der Vergasungseinrichtung 10 und der Brennkammer 4 der Gasturbine 2 in die Haupt-Synthesegasleitung 9 geschaltet sind.

Zur Bereitstellung des für die Vergasung des fossilen Brennstoffs B benötigten Sauerstoffs O₂ ist der Vergasungseinrichtung 10 über eine Sauerstoffleitung 12 eine Luftzerlegungseinrichtung 13 vorgeschaltet. Die Luftzerlegungseinrichtung 13 ist eingangsseitig mit einem Luftstrom L beaufschlagbar, der sich aus einem ersten Teilstrom T1 und einem zweiten Teilstrom T2 zusammensetzt. Der erste Teilstrom T1 ist der im Verdichter 3 verdichteten Luft entnehmbar. Dazu ist die Luftzerlegungseinrichtung 13 eingangsseitig an eine Entnahmeluftleitung 14 angeschlossen, die an einer Zweigstelle 15 von der Druckluftleitung 5 abzweigt. In die Entnahmeluftleitung 14 mündet zudem eine weitere Luftleitung 16, in die ein zusätzlicher Luftverdichter 17 geschaltet ist und über die der zweite Teilstrom T2 der Luftzerlegungseinrichtung 13 zuführbar ist. Im Ausführungsbeispiel setzt sich somit der der Luftzerlegungseinrichtung 13 zuströmende gesamte Luftstrom L zusammen aus dem von der Druckluftleitung 5 abgezweigten Teilstrom T1 (abzüglich einer nachfolgend erläuterten Teilmenge T') und aus dem vom zusätzlichen Luftverdichter 17 geförderten Luftstrom T2. Ein derartiges Schaltungskonzept wird auch als teilintegriertes Anlagenkonzept bezeichnet. In einer alternativen Ausgestaltung, dem sogenannten vollintegrierten Anlagenkonzept, kann die weitere Luftleitung 16 mitsamt dem zusätzlichen Luftverdichter 17 entfallen, so dass die Bespeisung der Luftzerlegungseinrichtung 13 mit Luft vollständig über den der Druckluftleitung 5 entnommenen Teilstrom T1 erfolgt.

In die Entnahmeluftleitung 14 ist ein Wärmetauscher 31 geschaltet, um Wärme aus der Entnahmeluft wieder zurückzugewinnen, wodurch ein besonders hoher Wirkungsgrad der Gas- und Dampfturbinenanlage erreichbar ist.

In Strömungsrichtung des Teilstroms T1 gesehen hinter dem Wärmetauscher 31 zweigt von der Entnahmeluftleitung 14 eine Kühlluftleitung 32 ab, über die der Gasturbine 2 eine Teilmenge T' des gekühlten Teilstroms T1 als Kühlluft zur Schaufelkühlung zuführbar ist.

Der in der Luftzerlegungseinrichtung 13 bei der Zerlegung des Luftstroms L zusätzlich zum Sauerstoff O₂ gewonnene Stickstoff N₂ wird über eine an die Luftzerlegungseinrichtung 13 angeschlossene Stickstoffleitung 18 einer Mischvorrichtung 19 zugeführt und dort dem Synthesegas SG zugemischt. Die Mischvorrichtung 19 ist dabei für eine besonders gleichförmige und strähnenfreie Vermischung des Stickstoffs N₂ mit dem Synthesegas SG ausgebildet.

Das von der Vergasungseinrichtung 10 abströmende Synthesegas SG gelangt über die Haupt-Synthesegasleitung 9 zunächst in einen Synthesegas-Abhitzedampferzeuger 20, in dem durch Wärmetausch mit einem Strömungsmedium eine Abkühlung des Synthesegases SG erfolgt. Bei diesem Wärmetausch erzeugter Hochdruckdampf kann in nicht näher dargestellter Weise einer Hochdruckstufe eines Wasser-Dampf-Kreislaufs einer Dampfturbinenanlage zugeführt werden.

In Strömungsrichtung des Synthesegases SG gesehen hinter dem Synthesegas-Abhitzedampferzeuger 20 und vor einer Mischvorrichtung 19 sind in die Haupt-Synthesegasleitung 9 eine Entstaubungseinrichtung 21 für das Synthesegas SG sowie eine Entschwefelungsanlage 22 geschaltet. In alternativer Ausgestaltung kann anstelle der Entstaubungseinrichtung 21, insbesondere bei Vergasung von Öl als Brennstoff, auch eine Rußwäschevorrichtung vorgesehen sein.

Für einen besonders geringen Schadstoffausstoß bei der Verbrennung des vergasten Brennstoffs in der Brennkammer 4 ist eine Beladung des vergasten Brennstoffs mit Wasserdampf vor Eintritt in die Brennkammer 4 vorgesehen. Diese kann in wärmetechnisch besonders vorteilhafter Weise in einem Sättigersystem erfolgen. Dazu ist in die Haupt-Synthesegasleitung 9 ein Sättiger 23 geschaltet, in dem der vergaste Brennstoff im Gegenstrom zu aufgeheiztem Sättigerwasser geführt ist. Das Sättigerwasser zirkuliert dabei in einem an den Sättiger 23 angeschlossenen Sättigerkreislauf 24, in den eine Umwälzpumpe 25 sowie zur Vorheizung des Sättigerwassers ein Wärmetauscher 26 geschaltet sind. Zum Ausgleich der bei der Sättigung des vergasten Brennstoffs auftretenden Verluste an Sättigerwasser ist an den Sättigerkreislauf 24 eine Einspeiseleitung 27 angeschlossen.

In Strömungsrichtung des Synthesegases SG gesehen hinter dem Sättiger 23 ist in die Haupt-Synthesegasleitung 9 sekundärseitig ein als Synthesegas-Mischgas-Wärmetauscher wirkender Wärmetauscher 28 geschaltet. Der Wärmetauscher 28 ist dabei primärseitig an einer Stelle vor der Entstaubungseinrichtung 21 ebenfalls in die Haupt-Synthesegasleitung 9 geschaltet, so dass das der Entstaubungseinrichtung 21 zuströmende Synthesegas SG einen Teil seiner Wärme auf das aus dem Sättiger 23 abströmende Synthesegas SG überträgt. Die Führung des Synthesegases SG über den Wärmetauscher 28 vor Eintritt in die Entschwefelungsanlage 22 kann dabei auch bei einem hinsichtlich der anderen Komponenten abgeänderten Schaltungskonzept vorgesehen sein. Insbesondere bei Einschaltung einer Rußwäscheeinrichtung kann der Wärmetauscher bevorzugt synthesegasseitig stromab der Rußwäscheeinrichtung angeordnet sein.

Zwischen den Sättiger 23 und den Wärmetauscher 28 ist in die Haupt-Synthesegasleitung 9 sekundärseitig ein weiterer Wärmetauscher 29 geschaltet, der primärseitig speisewasserbeheizt oder auch dampfbeheizt sein kann. Durch den als Synthesegas-Reingas-Wärmetauscher ausgebildeten Wärmetauscher 28 und den Wärmetauscher 29 ist dabei eine besonders zuverlässige Vorwärmung des der Brennkammer 4 der Gasturbine 2 zuströmenden Synthesegases SG auch bei verschiedenen Betriebszuständen der Gas- und Dampfturbinenanlage gewährleistet.

Zur Wärmeeinkopplung in den Sättigerkreislauf 24 ist zusätzlich zum Wärmetauscher 26, der beispielsweise mit aufgeheiztem, nach einem Speisewasservorwärmer abgezweigtem Speisewasser beaufschlagbar ist, ein Sättigerwasser-Wärmetauscher 30 vorgesehen, der primärseitig mit Speisewasser aus einem nicht dargestellten Speisewasserbehälter beaufschlagbar ist.

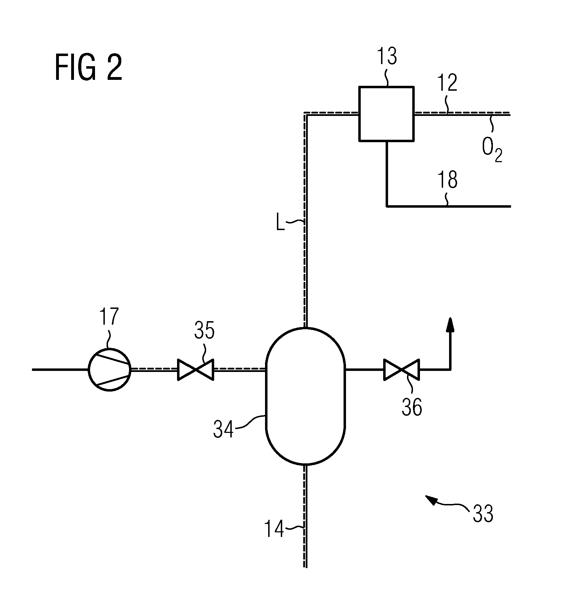

Figur 2 beschreibt die erfinderische Luftzerlegungsanlage 33 mit einem Prozessluftpufferbehälter 34, der direkt in der Entnahmeluftleitung 14 zwischen dem Verdichter 3 der Gasturbine 2 (s. Figur 1) und der Luftzerlegungseinrichtung 13 angeordnet ist. An dem Prozessluftpufferbehälter 34 ist ein separater Luftverdichter 17 angeschlossen, welcher über eine Regelarmatur 35 zu- oder abgesperrt werden kann. Der Prozessluftpufferbehälter 34 verfügt über eine Druckregelung und - Überwachung mit Sicherheitsarmatur 36 zur Abblasung bei Überschreitung des zulässigen Überdruckes. Das Volumen des Prozessluftpufferbehälters 34 muss in Abhängigkeit vom übrigen Leitungsvolumen der Entnahmeluftleitung 14 ausgelegt werden. Die Funktion des Prozessluftpufferbehälters 34 besteht darin, auftretenden Druckschwankungen im Luftentnahmesystem zwischen dem Verdichter 3 der Gasturbine 2 und Luftzerlegungseinrichtung 13 und damit die Rückwirkung der Druckschwankungen auf die Brennkammern 4 der Gasturbine 2 mit dem Resultat eines Gasturbinenschnellschlusses zu vermeiden und somit die Anlagenverfügbarkeit zu erhöhen. Der separate Luftverdichter 17 dient zur Konstanthaltung des benötigten Druckes für die Luftzerlegungseinrichtung 13 in der Entnahmeluftleitung 14.

## Patentansprüche

1. Luftzerlegungsanlage (33) mit einer Luftzerlegungseinrichtung (13), **dadurch gekennzeichnet, dass** der Luftzerlegungseinrichtung (13) ein Prozessluftpufferbehälter (34) vorgeschaltet ist.

2. Die Luftzerlegungsanlage (33) nach Anspruch 1, wobei der Prozessluftpufferbehälter (34) der Luftzerlegungseinrichtung (13) unmittelbar vorgeschaltet ist.

3. Die Luftzerlegungsanlage (33) nach Anspruch 1 oder 2, wobei der Prozessluftpufferbehälter (34) eine Drucküberwachung aufweist.

4. Die Luftzerlegungsanlage (33) nach einem der vorhergehenden Ansprüche, wobei der Prozessluftpufferbehälter (34) eine Druckregelung aufweist.

5. Die Luftzerlegungsanlage (33) nach einem der vorhergehenden Ansprüche, wobei der Prozessluftpufferbehälter (34) eine Sicherheitsarmatur (36) zur Abblasung bei Überschreitung eines zulässigen Überdruckes im Prozessluftpufferbehälter (34) aufweist.

6. Die Luftzerlegungsanlage (33) nach einem der vorhergehenden Ansprüche, wobei dem Prozessluftpufferbehälter (34) ein Luftverdichter (3,17) vorgeschaltet ist.

7. Die Luftzerlegungsanlage (33) nach Anspruch 6, wobei eine Regelarmatur (35) zwischen dem Luftverdichter (17) und dem Prozessluftpufferbehälter (34) angeordnet ist.

8. Die Luftzerlegungsanlage (33) nach einem der vorhergehenden Ansprüche, wobei die Luftzerlegungseinrichtung (13) eine kryogene Luftzerlegungseinrichtung ist.

9. Die Luftzerlegungsanlage (33) nach einem der Ansprüche 1 bis 7, wobei die Luftzerlegungseinrichtung (13) eine membranbasierte Luftzerlegungseinrichtung ist.

10. Gas- und Dampfturbinenanlage mit integrierter Vergasung mit einer Luftzerlegungsanlage (33) nach einem der vorhergehenden Ansprüche.

11. Die Gas- und Dampfturbinenanlage nach Anspruch 10, mit einer Gasturbine (2) und einem zugehörigen Verdichter (3), wobei der Verdichter (3) mit dem Druckluftpufferbehälter (33) über eine Entnahmeluftleitung (14) verbunden ist.

12. Verfahren zum Betrieb einer Luftzerlegungsanlage (33) umfassend eine Luftzerlegungseinrichtung (13), **dadurch gekennzeichnet, dass** Prozessluft für die Luftzerlegungseinrichtung (13) gepuffert wird.
